# EUROPEAN PATENT APPLICATION

(11) **EP 1 396 370 A1**
(43) Date of publication of application: **10.03.2004**
(21) Application number: 03103265.9
(22) Date of filing: 01.09.2003
(51) Int. Cl.: B60K 6/04, F16H 57/04, F01P 3/20

(54) **A cooling system and method for a hybrid electric vehicle**

(30) Priority: 06.09.2002 US 64998
(71) Applicant: Ford Global Technologies, LLC, Dearborn, Michigan 48126 (US)
(72) Inventor: Jaura, Arun, Kumar, Michigan 48188, Canton (US); Park, Chan-woo, 48105 Ann Arbor (US); Hammond, Matthew, David, 48239, Redford (US); Thomas, Steven, Gerald, 48301, Bloomfield Hills (US)
(74) Representative: Messulam, Alec Moses

(57) **Abstract**

A cooling system 60 and method to meet the cooling needs of a hybrid electric vehicle is disclosed. The system 60 has a cooling loop 68 with a heat exchanger 78 and conduits to connect a stator housing of a motor 63, transmission 64, and heat exchanger 78 so that coolant flows through the cooling loop through the action of either a mechanical transmission pump 87 or an auxiliary pump 86 or both.

A controller 91 can be provided to receive and process input from at least one vehicle sensor 93 and command the auxiliary pump 86 to operate when the processed input of at least one vehicle sensor 93 exceeds a pre-selected threshold.

## Description

The present invention relates generally to a hybrid electric vehicle and in particular to a cooling system and method to meet the cooling needs of the motor of a hybrid electric vehicle.

The need to reduce fossil fuel consumption and emissions in automobiles and other vehicles predominately powered by internal combustion engines (ICEs) is well known. Vehicles powered by electric motors is one way of addressing these needs, another alternative solution is to combine a smaller ICE with electric motors into one vehicle. Such vehicles combine the advantages of an ICE vehicle and an electric vehicle and are typically called hybrid electric vehicles (HEVs), an example of which is described in U.S. Patent No. 5,343,970.

The HEV is described in a variety of configurations. Many HEV patents disclose systems where an operator is required to select between electric and internal combustion operation. In other configurations, the electric motor drives one set of wheels and the ICE drives a different set.

Other, more useful, configurations have developed. For example, a series hybrid electric vehicle (SHEV) configuration is a vehicle with an engine (most typically an ICE) connected to an electric motor called a generator. The generator, in turn, provides electricity to a battery and another motor, called a traction motor. In the SHEV, the traction motor is the sole source of wheel torque. There is no mechanical connection between the engine and the drive wheels. A parallel hybrid electrical vehicle (PHEV) configuration has an engine (most typically an ICE) and an electric motor that work together in varying degrees to provide the necessary wheel torque to drive the vehicle. Additionally, in the PHEV configuration, the motor can be used as a generator to charge the battery from the power produced by the ICE.

A parallel/series hybrid electric vehicle (PSHEV) has characteristics of both PHEV and SHEV configurations and is sometimes referred to as a "split" parallel/series configuration. In one of several types of PSHEV configurations, the ICE is mechanically coupled to two electric motors in a planetary gear-set transaxle. A first electric motor, the generator, is connected to a sun gear. The ICE is connected to a carrier gear. A second electric motor, a traction motor, is connected to a ring (output) gear via additional gearing in a transaxle. Engine torque can power the generator to charge the battery. The generator can also contribute to the necessary wheel (output shaft) torque if the system has a one-way clutch. The traction motor is used to contribute wheel torque and to recover braking energy to charge the battery. In this configuration, the generator can selectively provide a reaction torque that may be used to control engine speed. In fact, the engine, generator motor and traction motor can provide a continuous variable transmission (CVT) effect. Further, the HEV presents an opportunity to better control engine idle speed over conventional vehicles by using the generator to control engine speed.

The desirability of combining an ICE with electric motors is clear. There is great potential for reducing vehicle fuel consumption and emissions with no appreciable loss of vehicle performance or drivability. The HEV allows the use of smaller engines, regenerative braking, electric boost, and even operating the vehicle with the engine shutdown. Nevertheless, new ways must be developed to optimize the HEV's potential benefits.

One such area of HEV development is addressing the cooling needs of several new components to the HEV. For example, to achieve better fuel economy, an HEV can use an integrated-starter-generator (ISG) for starting and stopping the engine, providing boost to the powertrain, generating electrical charge, and regenerative braking. In some HEV configurations, the ISG can be located between the engine and the transmission. The engine, ISG, and transmission all operate at high temperatures and need to be carefully cooled to maintain reliable and efficient operation. In a typical vehicle environment the powertrain is enclosed and lacks sufficient air-flow to provide adequate cooling needs. Therefore, active coolant management is needed.

Vehicle coolant management is certainly known in the art, and in fact coolant management within an HEV is known. See generally, U.S. Patent No. 6,213,233. Some patents also address cooling needs for prior art generators. See generally, U.S. Patent No. 6,046,520 and U.S. Patent No. 6,326,709.

Known prior art ISG cooling uses either airflow cooling or a separate active cooling system including a separate electric pump, cooling line, and heat exchanger. The air cooling method is not sufficient for most rear wheel drive configurations, or any configuration with poor airflow around the powertrain. Unfortunately, there is no known prior art for cost effective and efficient cooling of an ISG in an HEV.

It is an object of this invention to provide an improved cooling system for a Hybrid powertrain that is both efficient in terms of cost and performance.

According to a first aspect of the invention there is provided a cooling system for a vehicle powertrain having a motor and a transmission characterised in that a cooling loop is in heat conductive contact with a stator housing of the motor and with the transmission, the cooling loop comprising a heat exchanger, a mechanical transmission pump, an auxiliary pump and conduits providing a fluid flow connection between the motor stator housing, the transmission and the heat exchanger.

The cooling system may further comprise at least one sensor and a controller for receiving and processing an input from the at least one sensor wherein the controller is operable to command the auxiliary pump to operate when the processed input of at least one sensor exceeds a pre-selected threshold.

The controller may be a vehicle system controller.

There may be a program of control logic embodied within the controller to interpret the or each signal from the or each sensor and to issue a command signal based on the interpretation to control the auxiliary pump to operate when the processed input from at least one sensor exceeds a pre-selected threshold.

The cooling loop may further comprise bypass conduits and bypass valves having actuators independently controllable by the controller to operate when the processed input from at least one sensor exceeds a pre-selected threshold.

The auxiliary pump may be a reversible pump.

The motor may be an integrated-starter-generator.

The powertrain may be arranged in a series configuration.

The auxiliary pump may be internal to the transmission.

Alternatively, the auxiliary pump may be external to the transmission.

The cooling loop may be configured to maintain the temperature of the transmission below 121°C (250 degrees Fahrenheit) and the temperature of the motor below 177°C (350 degrees Fahrenheit).

At least part of the stator housing may be overlapped by a transmission housing. In which case at least part of the stator housing may be housed within the transmission housing.

Alternatively, the stator housing may be located adjacent to the transmission housing. In which case, the transmission housing may be fastened to the stator housing.

According to a second aspect of the invention there is provided a vehicle having a cooling system characterised in that the cooling system is a cooling system in accordance with said first aspect of the invention.

The vehicle may be a hybrid electric vehicle.

According to a third aspect of the invention there is provided a method of cooling a vehicle powertrain having a motor and a transmission characterised in that the method comprises the step of pumping coolant through a cooling loop which is in heat conductive contact with a motor stator housing in the motor and with the transmission.

The method may further comprise the steps of receiving and processing the output from at least one vehicle sensor and commanding an auxiliary pump to operate when the processed input of the at least one vehicle sensor exceeds a pre-selected threshold.

The invention will now be described by way of example with reference to the accompanying drawing of which:-
Figure 1 illustrates a prior art vehicle cooling system;
Figure 2 illustrates an ISG vehicle cooling system of the present invention;
Figure 3 illustrates an alternate embodiment ISG vehicle cooling system of the present invention;
Figure 4 illustrates one embodiment of an ISG stator housing of the present invention; and
Figure 5 illustrates an alternate embodiment of an ISG stator housing of the present invention.

The present invention relates to electric vehicles and, more particularly, hybrid electric vehicles (HEVs). The present invention provides a cooling system for an electric vehicle's motor. The illustrated embodiment describes the electric motor as an integrated-starter-generator (ISG), though the invention can apply to any electric motor.

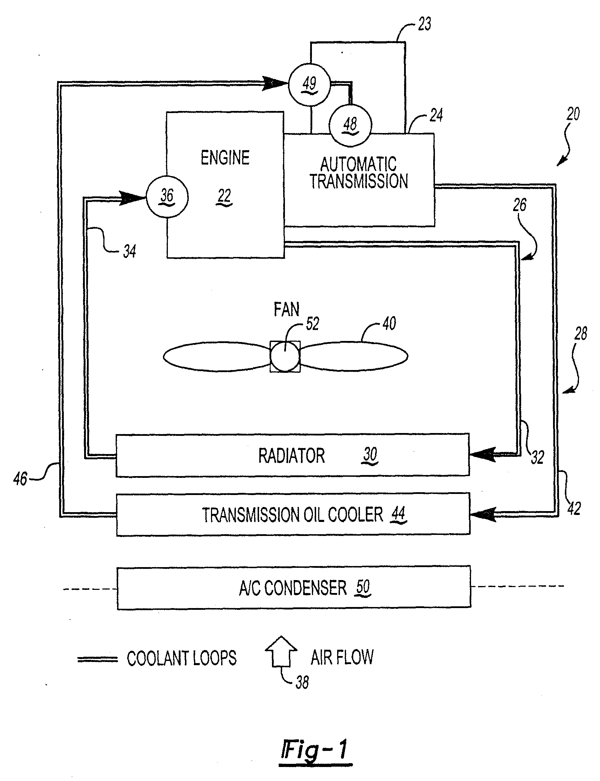

To assist in understanding the present invention, Figure 1 illustrates a simplified conventional prior art vehicle cooling system for a vehicle generally described at 20 having an internal combustion engine (engine) 22 and an automatic transmission (transmission) 24. This conventional cooling system 20 has an engine cooling loop 26 and an independent transmission cooling loop 28.

In the engine cooling loop 26, coolant (not shown) is fed from the engine 22 to an inlet of a heat exchanger, such as a radiator 30, via a first conduit 32, such as hoses, piping, and other means known in the art. Coolant exits the radiator 30 and returns to the engine 22 via a second conduit 34. Waste heat is removed from the engine 22 by the coolant and transported through the engine cooling loop 26 via the conduits 32 and 34 through the action of a first pump 36 driven by the engine 22.

In the transmission cooling loop 28, transmission oil (not shown) is fed from the transmission 24 to an inlet of a separate heat exchanger, such as a transmission oil cooler 44, via a third conduit 42, such as hoses, piping, and other means known in the art. The transmission oil exits the oil cooler 44 and returns to the transmission 24 via a fourth conduit 46. Waste heat is removed from the transmission 24 by the transmission oil and transported through the transmission cooling loop 28 via the conduits 42 and 46 through the action of a second pump 48 driven by, for example, the transmission 24.

Another separate heat exchanger, an air conditioner (A/C) condenser 50, is also illustrated in Figure 1. Many other possible packaging orders of these heat exchangers within the airflow are possible using the present invention. For example, the transmission air cooler 44 could be located in front of a cooling airflow 38 to the A/C condenser 50.

All waste heat traveling through cooling loops 26 and 28 is removed or vented from the vehicle by the cooling airflow 38 as it passes through the various illustrated heat exchangers, i.e., the radiator 30, transmission oil cooler 44, and A/C condenser 50. The cooling airflow 38 can vary based on vehicle speed and ambient air temperature, and can be increased by the action of a fan 40. The fan 40 can be driven, for example, by the engine 22 or as illustrated in Figure 1, by a separate electric motor 52.

An auxiliary pump, such as an auxiliary electric oil pump (auxiliary pump) 49 known in the art, can also be added to the transmission cooling loop 28 to pressurize some of the transmission oil systems when the vehicle is stopped or the engine is off, i.e., the mechanical transmission pump, the second pump 48, is not operating. When the engine 22 is in operation, the second pump 48 can supply the transmission systems with oil alone or in combination with the auxiliary pump 49. In one embodiment, the mechanical transmission pump can deactivate the auxiliary pump 49. The auxiliary pump 49 can be located at various places within the transmission cooling loop 28 including inside a transmission oil pan 23.

The present invention provides a thermal management strategy for an HEV having an electric motor such as an ISG. An ISG generates significant additional waste heat to the vehicle powertrain and should have active cooling. An independent ISG cooling system would negatively impact fuel economy and add additional hardware, components, maintenance, cost, and weight to a vehicle. The present invention solves these shortcomings with minimal vehicle modifications by using the existing transmission cooling system loop. This includes using an auxiliary pump, such as described above, to transport transmission oil through a transmission-cooling loop further routed through an ISG cooling jacket, even when the engine and transmission are not running. Use of the transmission cooling circuit to cool both an ISG and transmission is possible since the preferred ISG and transmission operating temperatures are similar. The increased cooling demand of the combined ISG and transmission cooling loop can easily be accommodated using a larger transmission oil cooler and properly sized auxiliary pump for the transmission oil.

Using the present invention, an auxiliary electric oil pump within the transmission cooling loop could also be switchable through a valve in a hydraulic valve body of the transmission for example, to bypass fluid around an ISG stator housing or jacket (i.e., the non-moving portion of the ISG) when the ISG cooling needs are minimal and through the rest of the transmission cooling loop when the engine is running. The auxiliary electric oil pump can be switched back to cooling the ISG stator jacket when the engine is off or ISG cooling needs are high. A larger volume oil pan may be necessary to accommodate the additional fluid volume of this modified transmission cooling loop. The auxiliary pump currently used in prior art transmission applications may need to be enlarged to accommodate the added cooling flow requirements. Although the auxiliary pump in the prior art is located inside the transmission oil pan, it could be externally mounted to package a larger motor needed to drive the pump. The transmission oil cooler would similarly need to increase in size, but because of its relatively small size in the art, there should be adequate package space available within a vehicle.

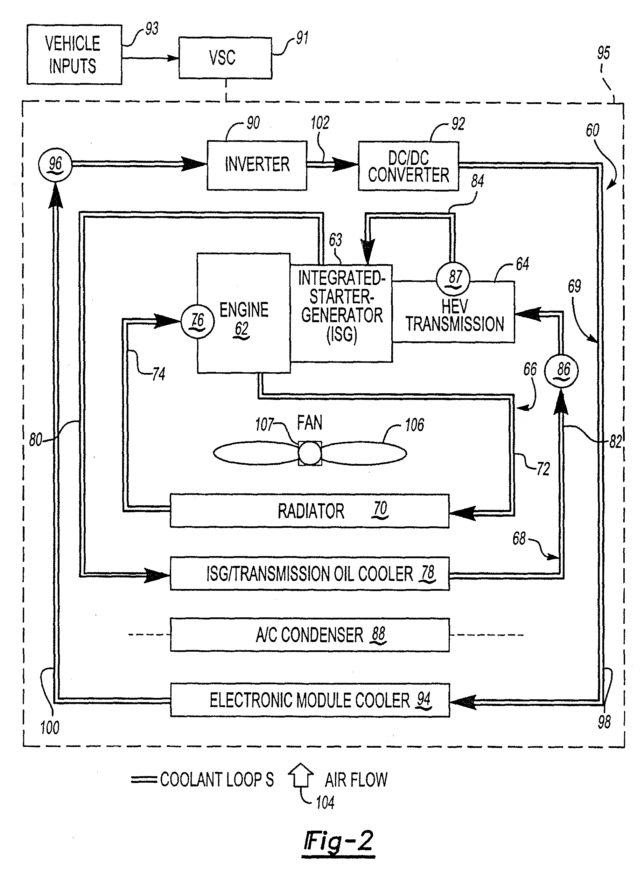

Figure 2 illustrates a vehicle cooling system for an HEV having an ISG using an embodiment of the present invention and is generally indicated at 60. The illustrated HEV powertrain configuration has an internal combustion engine (engine) 62 (in one embodiment, the engine 62 can be a 3.5-liter engine known in the art), an integrated starter generator (ISG) 63, and an HEV transmission 64 in a series arrangement. The HEV cooling system 60 has an HEV engine cooling loop 66, a combined ISG/transmission cooling loop 68, an A/C condenser cooling loop 88 and an independent inverter/converter cooling loop 69.

In the HEV engine cooling loop 66, coolant (not shown) is fed from the HEV engine 62 to an inlet of a heat exchanger, such as an HEV radiator 70, via a fifth conduit 72, such as hoses, piping, etc. Coolant exits the HEV radiator 70 and returns to the engine 62 via a sixth conduit 74. Waste heat is removed from the HEV engine 62 by the coolant and transported through the HEV engine cooling loop 66 via the conduits 72 and 74 through the action of a third pump 76 that can be driven by the engine 62. The ISG/transmission cooling loop 68 is in a heat conductive contact with the ISG 63 and HEV transmission 64.

In the enclosed ISG/transmission cooling loop 68, transmission oil (not shown) is fed from the ISG 63 to an inlet of a heat exchanger, such as an ISG/transmission oil cooler 78, via a seventh conduit 80, such as hoses, piping, etc. The transmission oil exits the ISG/transmission oil cooler 78 and returns to the HEV transmission 64 via an eighth conduit 82. The transmission oil can carry waste heat out of the ISG 63 by flowing through an ISG stator housing described below. From the HEV transmission 64, the transmission oil can flow back to the ISG 63 via a ninth conduit 84. Waste heat is removed from the ISG 63 and transmission 64 by the transmission oil and transported through the ISG/transmission cooling loop 68 via the conduits 80, 82, and 84 through the action of either an auxiliary pump such as an ISG/transmission pump 86 or an HEV mechanical transmission pump 87 or both. The ISG/transmission pump 86 can be electrical or external or internal to the transmission as described above.

A controller such as a vehicle control system (VCS) 91, through a communication network, such as a controller area network (CAN) 95, can control the ISG/transmission pump 86 and even an HEV fan 106 speed using vehicle inputs 93. Vehicle inputs 93 can include vehicle speed, ambient temperature, coolant temperature sensors within the ISG 63 and the HEV transmission 64. The VSC 91 can control the speed of the ISG/transmission pump 86 and HEV fan 106 based on predetermined values to maintain optimal operating temperatures for both the HEV transmission 64 and the ISG 63. The VSC 91 and the CAN 54 can include one or more microprocessors, computers, or central processing units operatively connected and in communication with one or more computer readable devices; one or more memory management units; and input/output interfaces for communicating with various sensors, actuators and control circuits known in the art. A program of control logic can be embodied within the controller to interpret sensor signals (output) and to issue a command signal based on said interpretation to control the ISG/transmission cooling loop 68 when the processed input of at least one vehicle sensor exceeds a pre-selected threshold. For example, the controller can receive and process input from at least one vehicle sensor and command the auxiliary pump to operate when the processed input of at least one vehicle sensor exceeds a pre-selected threshold.

Also included in this HEV cooling system 60 schematic are the HEV A/C condenser 88 and the inverter/converter cooling loop 69. The inverter/converter cooling loop 69, is similar to the other cooling loops having coolant carrying waste heat flowing through an inverter 90 and DC/DC converter 92 to an electronic module cooler 94 through the action of an inverter/converter coolant pump 96 driven by an electric motor via additional conduits 98, 100, and 102.

Generally, all waste heat traveling through cooling loops 66, 68 and 69 is removed/vented from the vehicle by a cooling airflow 104 as it passes through the various heat exchangers, i.e., the HEV radiator 70, ISG/transmission oil cooler 78, HEV A/C condenser 88, and electronic module cooler 94. The cooling airflow 104 varies based on vehicle speed and ambient air temperature, and can be increased by the action of the HEV fan 106. In one embodiment, the fan 106 can be driven by a 42-volt electric fan 107 known in the art. Again, many possible packaging orders of the various heat exchangers within the airflow is possible.

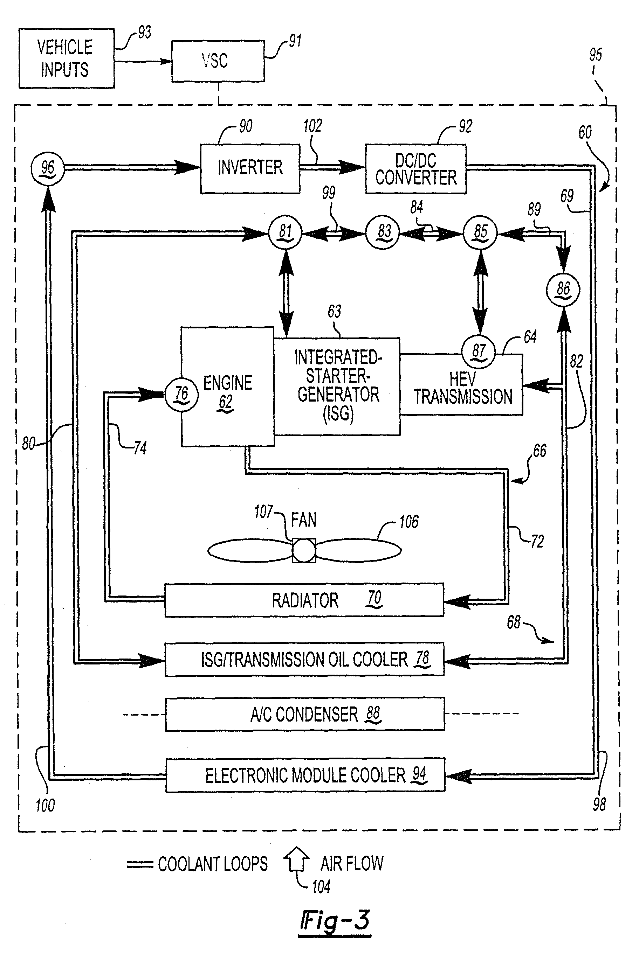

An alternate embodiment using the present invention could also place a coolant bypass system around the HEV transmission 64 or the ISG 63. The bypass could be controlled to limit transmission oil flow into the HEV transmission 64 and the ISG 63 until each component reaches its optimal operating temperature at start-up. Appropriate valves and controllers would need to be added as well (see Figure 3, discussed below).

For example, a transmission's optimal operating temperature can be 82°C (180 degrees Fahrenheit) with a 121°C (250 degrees Fahrenheit peak).

The ISG 63 optimal operating temperature can be hotter with a 177°C (350 degrees Fahrenheit peak). Therefore, the system could be configured to keep the ISG transmission cooler 78 or at least size the HEV fan 106 and ISG/transmission cooler 78 to never allow a temperature for the transmission oil to exceed 121°C (250 degrees Fahrenheit) and to never allow a temperature for the oil in the ISG 63 greater than 177°C (350 degrees Fahrenheit). The ISG transmission pump 86 could be a reversible pump to add flexibility to the overall ISG/transmission cooling loop 68.

For example, the ISG/transmission cooling loop 68 can reverse flow at an ISG 63 startup to bring waste heat from the ISG 63 back to the HEV transmission 64 until an optimal operating temperature for the HEV transmission 64 is reached. Thus, this added flexibility could improve vehicle performance and efficiency.

Figure 3 illustrates an example of an alternate embodiment of the present invention. Figure 3 adds additional valves having actuators controllable by the VSC 91 known in the art, the ISG transmission pump 86 is reversible, and some additional transmission oil fluid paths (bypass conduits). Specifically, this alternate embodiment adds independently controllable valves 81, 83, and 85. The VSC 91 can control the valves when the processed input from at least one vehicle sensor exceeds a pre-selected threshold to divert transmission oil to the HEV transmission 64 or the ISG 63 or to bypass conduits 99 and 89.

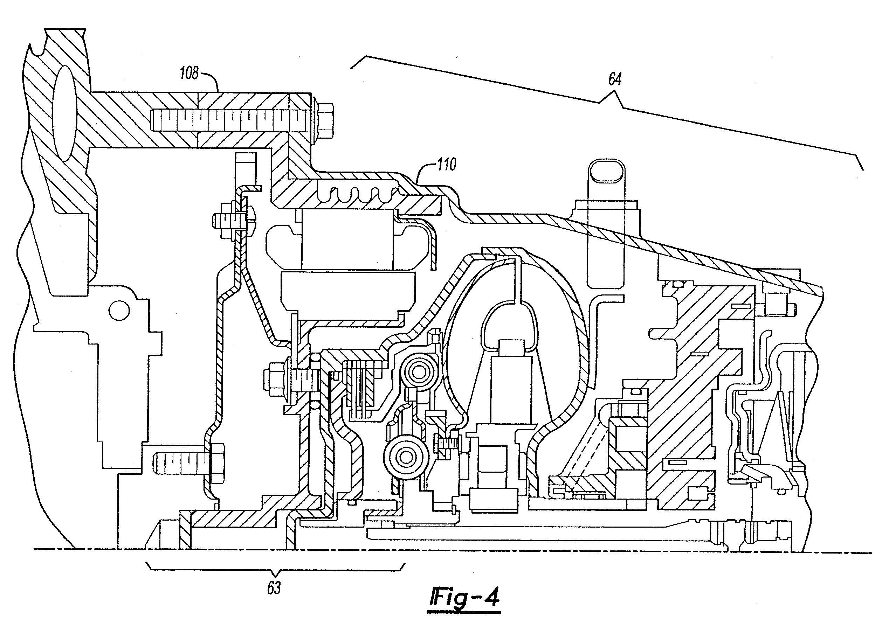

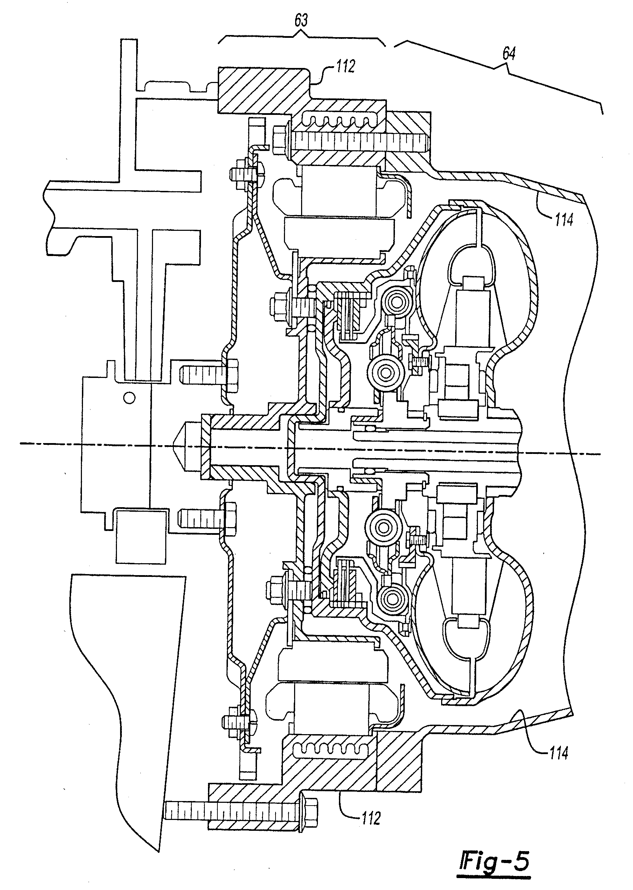

Figures 4 and 5 illustrate alternate embodiments of an ISG 63 stator housing using the present invention. In Figure 4, the ISG 63 has an integral stator housing 108 in which to pass transmission oil and is partially covered by a transmission housing 110.

In Figure 5, the alternate embodiment ISG 63 has an integral stator housing 112 in which to pass transmission oil and is adjacent to a transmission housing 114. The housing illustrated in Figure 4 is preferred from the perspective of size since this configuration allows more floor pan clearance.

Therefore in summary, the present invention provides a cooling system having a cooling loop with a heat exchanger and conduits in heat conductive contact with the stator housing of the motor, transmission, and heat exchanger. Coolant flows through the cooling loop through the action of either a mechanical transmission pump or an auxiliary pump or both. The auxiliary pump is needed specifically when the engine is in idle or is not operating. In one embodiment of the present invention, a controller receives and processes input from at least one vehicle sensor, and commands the auxiliary pump to operate when the processed input of at least one vehicle sensor exceeds a pre-selected threshold.

In an alternate embodiment of the present invention, the cooling loop also has bypass conduits and bypass valves having actuators independently controllable by the controller to operate when the processed input from at least one vehicle sensor exceeds a pre-selected threshold and the auxiliary pump is reversible. The auxiliary pump can be electric and either internal or external to the vehicle transmission.

The system can be configured to maintain a transmission temperature at no greater than 121°C (250 degrees Fahrenheit) and a temperature for the motor at no greater than 177°C (350 degrees Fahrenheit).

The stator housing can be configured to be overlapped by a transmission housing or adjacent to a transmission housing.

The above-described embodiments of the invention are provided purely for purposes of example. Many other variations, modifications, and applications of the invention may be made without departing from the scope of the invention.

## Claims

1. A cooling system for a vehicle powertrain having a motor (63) and a transmission (87) **characterised in that** a cooling loop (68) is in heat conductive contact with a stator housing (108, 112) of the motor (63) and with the transmission (64), the cooling loop (68) comprising a heat exchanger (78), a mechanical transmission pump (87), an auxiliary pump (86) and conduits providing a fluid flow connection between the motor stator housing (108, 112), the transmission (64)and the heat exchanger (78).

2. A cooling system as claimed in claim 1 wherein the cooling system further comprises at least one sensor (93) and a controller (91) for receiving and processing an input from the at least one sensor (93) wherein the controller (91) is operable to command the auxiliary pump (86) to operate when the processed input of at least one sensor (93) exceeds a pre-selected threshold.

3. A cooling system as claimed in claim 2 wherein the cooling loop further comprises bypass conduits and bypass valves (81, 83, 85) having actuators independently controllable by the controller (91) to operate when the processed input from at least one sensor (93) exceeds a pre-selected threshold.

4. A cooling system as claimed in any of claims 1 to 3 wherein the motor is an integrated-starter-generator (63).

5. A cooling system as claimed in any of claims 1 to 4 wherein the cooling loop (68) is configured to maintain the temperature of the transmission (87) below 121°C (250 degrees Fahrenheit) and the temperature of the motor (63) below 177°C (350 degrees Fahrenheit).

6. A cooling system as claimed in any of claims 1 to 5 wherein at least part of the stator housing (108) is overlapped by a transmission housing (110).

7. A cooling system as claimed in any of claims 1 to 5 wherein the stator housing (112) is located adjacent to the transmission housing (114).

8. A vehicle having a cooling system **characterised in that** the cooling system is a cooling system as claimed in any of claims 1 to 7.

9. A method of cooling a vehicle powertrain having a motor (63) and a transmission (64) **characterised in that** the method comprises the step of pumping coolant through a cooling loop (68) which is in heat conductive contact with a motor stator housing (108, 112) in the motor (63) and with the transmission (64).

10. A method as claimed in claim 9 further comprising the steps of receiving and processing the output from at least one vehicle sensor (93) and commanding an auxiliary pump (86) to operate when the processed input of the at least one vehicle sensor (93) exceeds a pre-selected threshold.
